# EUROPEAN PATENT APPLICATION

(11) **EP 4 711 652 A1**
(43) Date of publication of application: **18.03.2026**
(21) Application number: 24802733.6
(22) Date of filing: 18.04.2024
(51) Int. Cl.: F16K 1/24, F16K 1/18

(54) **VALVE**

(30) Priority: 08.05.2023 CN 202310511380
(71) Applicant: Horen Cortp Co., Ltd., Shanghai 200233 (CN)
(72) Inventor: FANG, Zhengwei, Xuhui District, Shanghai 200233 (CN)
(74) Representative: Diehl & Partner
(86) International application number: PCT/CN2024/088627
(87) International publication number: WO 2024/230448

(57) **Abstract**

Disclosed in the present invention is a valve, comprising: a housing having a passage extending therethrough; a flange being in a sealed connection with one end of the housing; an inner valve seat being arranged in the passage and in a sealed connection with the housing; a valve core being movably arranged in the passage; and a driving member passing through the housing and being connected to a mounting surface of the valve core; the mounting surface of the valve core is provided with a guiding block protruding towards the driving member, and the guiding block is provided with an inner contour guiding surface; the driving member is provided with a guiding rib, which is provided with an outer contour guiding surface; the outer contour guiding surface cooperates with the inner contour guiding surface to drive the valve core to rotate to a switching position in the radial direction of the passage, and when the valve core rotates to the switching position, the end of the valve core connected to the driving member is driven to move axially towards the inner valve seat to press the inner valve seat to close the passage. Compared with the prior art, the valve has a compact and simple structure and is easy to operate; and when the valve is opened, low torque is needed, and a large opening angle, large flow, and reliable sealing are achieved.

## Description

This application claims the priority of the following Chinese patent application:
Filing date: May 8, 2023; Application number: 2023105113804; Invention title: Valve;
The entirety of the above application is incorporated herein by reference.

### Technical Field

The present invention relates to a storage container, in particular to a valve.

### Background

In order to make the existing valves used in Intermediate bulk storage containers more effective, the opening and closing structures of the valves have always needed to be optimized.

For example, an existing guiding groove type rising-stem ball valve is provided with an S-shaped guiding groove on the valve stem that cooperates with a guiding pin. When the valve stem rises, it drives the ball to disengage from the valve seat and then rotate by 90° counterclockwise, thereby fully opening the valve. When the valve stem descends, it drives the ball to rotate back by 90° clockwise and then press against the valve seat, thereby closing the valve. The shortcomings of this technology are in that the valve stem has the long S-shaped guiding groove, when rotate to open or close, the valve stem needs to spiral up or down within the guiding groove. Therefore the guiding groove occupies a large space and results in a large rotation angle.

Another example is a track-type plug valve, which includes a valve body, a valve cover, an actuator, a valve stem, a valve seat, a valve plug that forms a conical surface sealing pair with the valve seat, and a track-type mechanism. The track-type mechanism consists of a track ring with two guiding grooves and installed on the neck of the valve plug and a double-pin plate with two guiding pins pinned into the guiding grooves. It also includes a locking nut and an adjusting ring for adjusting the installation position of the track ring. However, the transmission device in this valve has a complex structure and occupies a large amount of space outside the valve body. The transmission device involves many parts and the assembly process is complicated.

### Summary of the Invention

The object of the present invention is to provide a valve with a compact and simple structure and easy operation. When the valve is opened, the torque is small, the opening angle is large, the flow rate is large, and the sealing is reliable.

In order to solve the above technical problems, an embodiment of the present invention provides a valve, comprising:
a housing, which has a passage extending therethrough;
a flange, which is in a sealed connection with one end of the housing;
an inner valve seat, which is disposed in the passage and in a sealed connection with the housing;
a valve core, which is movably disposed in the passage; and
a driving member, which passes through the housing and is connected to an mounting surface of the valve core; the mounting surface of the valve core has a guiding block protruding toward the driving member, and the guiding block has an inner contour guiding surface; the driving member has a guiding rib, and the guiding rib has an outer contour guiding surface; the outer contour guiding surface cooperates with the inner contour guiding surface to drive the valve core to rotate to a switching position along a radial direction of the passage, and when the valve core rotates to the switching position, drive an end of the valve core connected to the driving member to move axially in a direction toward the inner valve seat and press the inner valve seat to close the passage.

In an embodiment, the driving member has a positioning post, a transition post, and a connecting post connected in sequence from an inside of the passage to an outside of the passage; the positioning post is operatively inserted into the mounting surface of the valve core, the guiding rib protrudes from an outer periphery of the transition post, and the connecting post is connected to the housing and passes through the housing.

In an embodiment, the positioning post, the transition post, the guiding rib and the connecting post are integrated.

In an embodiment, the valve core has a protruding positioning rod on a side away from the driving member; a rod hole is provided on a wall surface of the passage for inserting the positioning rod, and the positioning rod is rotatably inserted into the rod hole;
the housing is provided with a mounting hole for the driving member to pass through, the mounting hole is communicated with the passage, and the mounting hole is arranged opposite to the rod hole.

In an embodiment, a protruding guiding post is provided at an end of the valve core facing the driving member;
the housing is provided with a guiding groove, which is open toward the valve core and extends along an axial direction of the passage; when the valve core rotates to the switching position, the guiding post directly faces an opening of the guiding groove, and the driving member drives the end of the valve core connected thereto to move axially toward the inner valve seat to allow the guiding post to be inserted into the guiding groove.

In an embodiment, the guiding block comprises a first guiding submodule and a second guiding submodule which are arranged opposite to and separated from each other; the inner contour guiding surface comprises a first guiding module surface and a second guiding module surface; the first guiding module surface and the second guiding module surface are arranged opposite to and separated from each other, and are respectively located on the first guiding submodule and the second guiding submodule; the guiding post is arranged on the second guiding submodule;
the first guiding module surface comprises a first starting portion, a first ending portion, and a first limiting portion, which are sequentially connected and extend in different directions; the second guiding module surface comprises a second starting portion, a second ending portion, and a second limiting portion, which are sequentially connected and extend in different directions;
the outer contour guiding surface comprises a first driving module surface and a second driving module surface; the first driving module surface and the second driving module surface are arranged opposite to each other and spaced apart;
the first driving module surface has a first driving surface and a first driven surface connected in sequence; the second driving module surface has a second driving surface and a second driven surface connected in sequence;
the first driven surface is operatively slide along the first starting portion to cooperate with the first limiting portion, and the first driving surface cooperates with the first ending portion, so that the guiding post slides out of the guiding groove; the first driven surface cooperates with the first limiting portion to operatively drive the valve core to rotate along a radial direction of the passage, so as to cause the guiding post to rotate in a direction away from the guiding groove;
the second driven surface is operatively slid along the second starting portion to cooperate with the second limiting portion, and the second driving surface cooperates with the second ending portion, so that the guiding post slides from the opening of the guiding groove into the guiding groove; the second driven surface cooperates with the second limiting portion to operatively drive the valve core to rotate along the radial direction of the passage, so as to cause the guiding post to rotate toward the direction of the guiding groove.

In an embodiment, the housing has a limiting edge extending toward the mounting hole, and when the valve core rotates to the switching position, the guiding post abuts against the limiting edge.

In an embodiment, a guiding edge is provided at the mounting hole, and when the valve core rotates in a radial direction of the passage, the guiding post slides along the guiding edge.

In an embodiment, the valve core is a flat structure;
the valve core has a valve disc, and a first extending plate and a second extending plate, wherein the first extending plate and the second extending plate are arranged opposite to each other and are located on a side of the valve disc away from the inner valve seat;
the guiding block is arranged on a top surface of the first extending plate;
the positioning rod is arranged on a bottom surface of the second extending plate.

In an embodiment, a housing limiting rib is provided on a wall surface of the passage, and the housing limiting rib is located between the rod hole and the inner valve seat;
a side of the valve core away from the driving member has a first valve core limiting rib and a second valve core limiting rib; when the valve core is located at the switching position, the first valve core limiting rib abuts against the housing limiting rib; when the valve core is located at the maximum valve flow position, the second valve core limiting rib abuts against the housing limiting rib.

In an embodiment, the valve further comprises:
a housing connector, which is detachably connected to the other end of the housing;
an outer valve seat, which is disposed in the housing connector and is in a sealed connection with the housing connector; and
a valve cover, which is detachably connected to the housing connector, and when the valve cover covers the housing connector, the valve cover is sealed against the outer valve seat.

Compared with the prior art, in the embodiment of the present invention, the driving member passes through the housing and is directly connected to the valve core, and when the driving member moves, the outer contour guiding surface of the guiding rib and the inner contour guiding surface of the guiding block allow the valve core to move, so that the valve core can rotate and move axially to close or open the passage; the connection structure between the driving member and the valve core is simple, compact, and easy to operate; when the valve is opened, low torque is needed, and a large opening angle, large flow, and reliable sealing are achieved.

### BRIEF DESCRIPTION OF THE DRAWINGS

One or more embodiments are exemplarily illustrated by figures in the corresponding drawings, these exemplifications do not constitute limitations on the embodiments, elements with the same reference numerals in the drawings are represented as similar elements, unless otherwise stated, the figures in the drawings do not constitute proportional limitations.
FIG.1 is an exploded view of a valve according to an embodiment of the present invention;
FIG.2 is a cross-sectional view of a valve according to an embodiment of the present invention;
FIG.3 is a schematic structural diagram of a housing according to an embodiment of the present invention;
FIG.4 is a schematic structural diagram of a driving member according to an embodiment of the present invention;
FIG5 is a schematic structural diagram of a valve core at one angle according to an embodiment of the present invention;
FIG.6 is a schematic structural diagram of a valve core at another angle according to an embodiment of the present invention;
FIG.7 is a schematic diagram of the position of the handle of the driving member when the flow rate in the valve is maximum in an embodiment of the present invention;
FIG.8 is a schematic structural diagram of the cooperation between the housing and the valve core in FIG.7 ;
FIG.9 is a cross-sectional view of the cooperation between the driving member and the valve core in FIG.7 ;
FIG.10 is a top cross-sectional view of the cooperation between the driving member and the valve core in FIG7;
FIG.11 is a schematic diagram of the position of the handle of the driving member when the valve core is at the switching position in an embodiment of the present invention;
FIG.12 is a schematic structural diagram of the cooperation between the housing and the valve core in FIG.11;
FIG.13 is a top cross-sectional view of the cooperation between the driving member and the valve core in FIG11;
FIG. 14 is a schematic diagram of the position of the handle of the driving member when the valve is closed in an embodiment of the present invention;
FIG. 15 is a schematic structural diagram of the cooperation between the housing and the valve core in FIG.14;
FIG.16 is a top cross-sectional view of the cooperation between the driving member and the valve core in FIG.14;
FIG.17 is a schematic diagram of the position of the handle of the driving member after the guiding post slides into the guiding groove during the process of opening the valve from the closed state in FIG.14 ;
FIG. 18 is a schematic structural diagram of the cooperation between the housing and the valve core in FIG.17;
FIG.19 is a top cross-sectional view of the cooperation between the driving member and the valve core in FIG.17;
FIG.20 is a schematic diagram of the position of the handle of the driving member after the valve core rotates to a certain angle during the process of opening the valve from the state in FIG.17 ;
FIG.21 is a schematic structural diagram of the cooperation between the housing and the valve core in FIG.20;
FIG.22 is a top cross-sectional view of the cooperation between the driving member and the valve core in FIG.20;
FIG.23 is an exploded view of the valve cover, housing connector, and housing in an embodiment of the present invention;

List of reference numerals: 100, valve; 1, housing; 13, mounting hole; 14, guiding groove; 15, rod hole; 16, limiting edge; 17, housing limiting rib; 18, guiding edge; 2, inner valve seat; 3, flange; 4, valve core; 41, positioning rod; 42, mounting surface; 43, guiding block; 431, first guiding submodule; 4311, first starting portion; 4312, first ending portion; 4313, first limiting portion; 432, second guiding submodule; 4321, second starting portion; 4322, second ending portion; 4323, second limiting portion; 44, guiding post; 45, first extending plate; 46, second extending plate; 47, first valve core limiting rib; 48, second valve core limiting rib; 5, driving member; 51, positioning post; 52, transition post; 53, connecting post; 54, handle; 55, guiding rib; 530, outer contour guiding surface; 531, first guiding module surface; 5311, first driving surface; 5312. first driven surface; 532, second guiding module surface; 5321, second driving surface; 5322, second driven surface; 10, passage; 6, housing connector; 7, outer valve seat; 8, valve cover; 9, flange sealing ring.

### DETAILED DESCRIPTION OF EMBODIMENTS

In order to make the purpose, technical solutions, and advantages of the embodiments of the present invention more clear, embodiments of the present invention will be described in detail below with reference to the accompanying drawings. However, those skilled in the art will appreciate that in the embodiments of the present invention, many technical details are provided to help readers better understand the present application. However, even without these technical details and various changes and modifications based on the following embodiments, the technical solutions claimed in the present application can still be implemented.

In the following description, for the purpose of illustrating the various disclosed embodiments, certain specific details are set forth in order to provide a thorough understanding of the various disclosed embodiments. However, those skilled in the relevant art will recognize that the embodiments may be practiced without one or more of these specific details. In other cases, well-known devices, structures, and techniques associated with this application may not be shown or described in detail to avoid unnecessarily obscuring the description of the embodiments.

Unless the context requires otherwise, throughout the specification and claims, the word "comprise" and variations such as "include" and "have" should be construed in an open, inclusive sense, that is, should be interpreted to mean "including, but not limited to."

The following will describe in detail various embodiments of the present invention in conjunction with the accompanying drawings to provide a clearer understanding of the objectives, features and advantages of the present invention. It should be understood that the embodiments shown in the accompanying drawings are not intended to limit the scope of the present invention, but are only intended to illustrate the essential spirit of the technical solution of the present invention.

Reference throughout this specification to "one embodiment" or "an embodiment" means that a particular feature, structure, or characteristic described in connection with the embodiments is included in at least one embodiment. Thus, the appearances of "in one embodiment" or "in an embodiment" in various places throughout this specification are not necessarily all referring to the same embodiment. Furthermore, the particular features, structures, or characteristics may be combined in any manner in one or more embodiments.

As used in this specification and the appended claims, the singular forms "a," "an," and "the" include plural referents unless the context clearly dictates otherwise. It should be noted that the term "or" is generally employed in its sense including "and/or" unless the context clearly dictates otherwise.

In the following description, in order to clearly show the structure and working mode of the present invention, many directional words will be used for description, but words such as "front", "back", "left", "right", "outside", "inside", "outward", "inward", "up", and "down" should be understood as convenient terms and should not be understood as restrictive terms.

Hereinafter, embodiments of the present invention will be described with reference to the accompanying drawings.

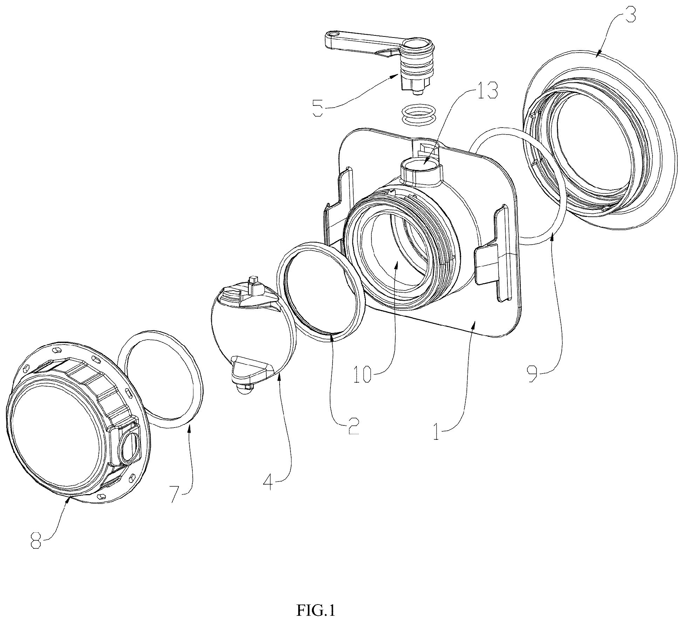

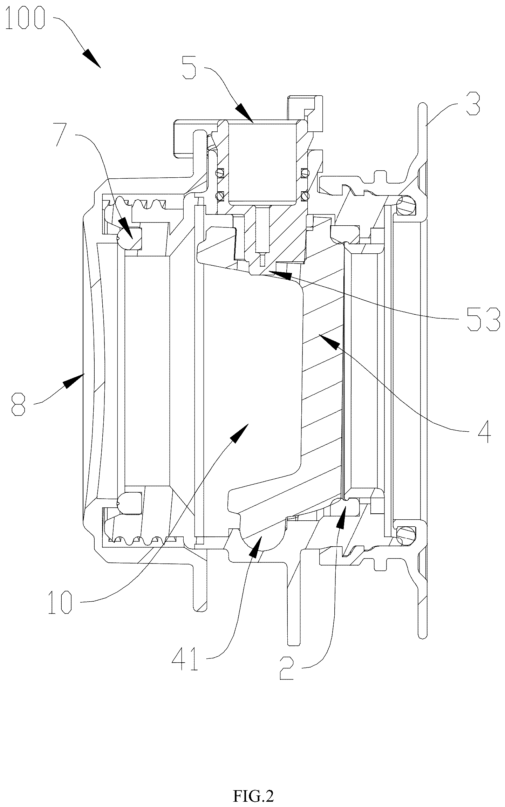

An embodiment of the present invention provides a valve 100. As shown in FIGs. 1 and 2, the valve 100 comprises a housing 1, an inner valve seat 2, a flange 3, a valve core 4, and an a driving member 5. The inner valve seat 2 may be a sealing ring and can be mounted within the housing 1. The valve 100 can be installed on a container. When the valve is closed, it prevents liquid from flowing out of the container; when the valve is opened, liquid in the container can flow into the passage in the valve through the passage in the flange and then be discharged. The housing 1 comprises a passage 10 extending through the housing 1, which is the passage allowing the liquid in the container to flow through. The inner valve seat 2 is disposed within the passage 10 and is in a sealed connection with the housing 1. The flange 3 is located at one end of the housing 1, a flange sealing ring 9 is sandwiched between the flange 3 and the housing 1, and the flange 3 is provided for connection to the container. The valve core is movably disposed within the passage 10, and located on the side of the inner valve seat 2 away from the flange 3. The driving member 5 passes through the housing 1, driving the valve core 4 to move toward the flange 3 and press against the inner valve seat 2 to close the passage 10, or driving the valve core 4 to separate from the inner valve seat 2 to open the passage 10. When the valve is closed, the inner valve seat 2 operatively withstands the liquid pressure, the direction of the liquid pressure is opposite to the direction in which the valve core presses the inner valve seat 2. That is, when the valve is closed, the valve core 4 presses the inner valve seat 2 in a direction toward the container and abuts against the inner valve seat 2 to close the passage 10, i.e., presses the inner valve seat to the right as shown in FIG.2 .

Specifically, as shown in FIGs. 1, 2, 4, 5, and 9, the driving member 5 passes through the housing 1 and is connected to a mounting surface 42 of the valve core 4. The mounting surface 42 of the valve core 4 has a guiding block 43 protruding toward the driving member 5, and the guiding block 43 has an inner contour guiding surface. The driving member 5 has a guiding rib 55, which has an outer contour guiding surface 530. The outer contour guiding surface 530 cooperates with the inner contour guiding surface to drive the valve core 4 to rotate in the radial direction of the passage 10 to a switching position, and when the valve core 4 rotates to the switching position, drive the end of the valve core 4 connected to the driving member 5 to move axially toward the inner valve seat 2 and press the inner valve seat 2 to close the passage 10.

From the above content, it is not difficult to find that the driving member 5 passes through the housing and is directly connected to the valve core 4, and when the driving member 5 moves, the outer contour guiding surface 530 of the guiding rib 55 and the inner contour guiding surface of the guiding block 43 allow the valve core 4 to move, so that the valve core 4 can rotate and move axially to close the passage 10 or open the passage 10. The connection structure between the driving member 5 and the valve core 4 is simple, compact, and easy to operate. When the valve is opened, the torque is small, the opening angle is large, the flow rate is large, and the sealing is reliable.

Furthermore, as shown in FIGs. 2, 4 and 5, the driving member 5 comprises a positioning post 51, a transition post 52, and a connecting post 53, which are sequentially connected from the inside of the passage 10 to the outside of the passage 10. The positioning post 51 is operatively inserted into the mounting surface 42 of the valve core 4, the guiding rib 55 protrudes from the outer periphery of the transition post 52, and the connecting post 53 is connected to the housing 1 and passes through the housing 1.

Additionally, as shown in FIGs. 1, 2, 4, 5 and 9, the positioning post 51, the transition post 52, the guiding rib 55 and the connecting post 53 are integrated. The driving member 5 further comprises a handle 54 connected to the connecting post 53, and the handle 54 is located outside the housing 1.

Furthermore, as shown in FIGS. 1, 2, 3, 4 and 6, the valve core 4 has a protruding positioning rod 41 on the side facing away from the driving member 5. The wall of the passage 10 has a rod hole 15 for inserting the positioning rod 41, and the positioning rod 41 is rotatably inserted into the rod hole 15, when the driving member 5 drives the valve core to rotate, the positioning rod 41 rotates within the rod hole 15. The housing 1 has a mounting hole 13 for the driving member 5 to pass through, and the mounting hole 13 is communicatedly connected to the passage 10 and is arranged opposite to the rod hole 15.

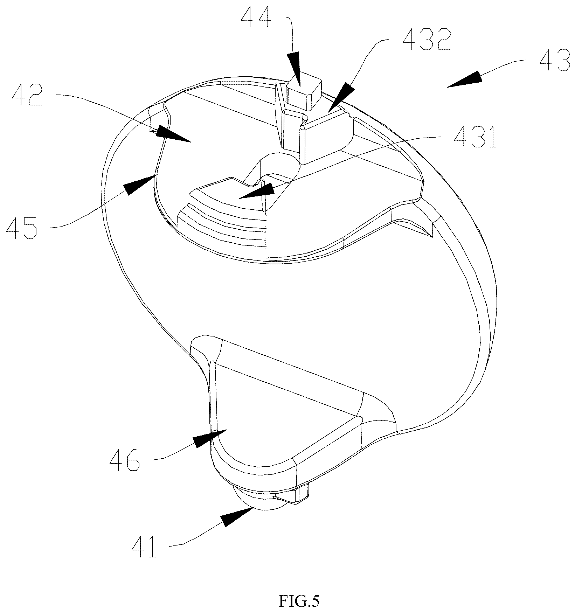

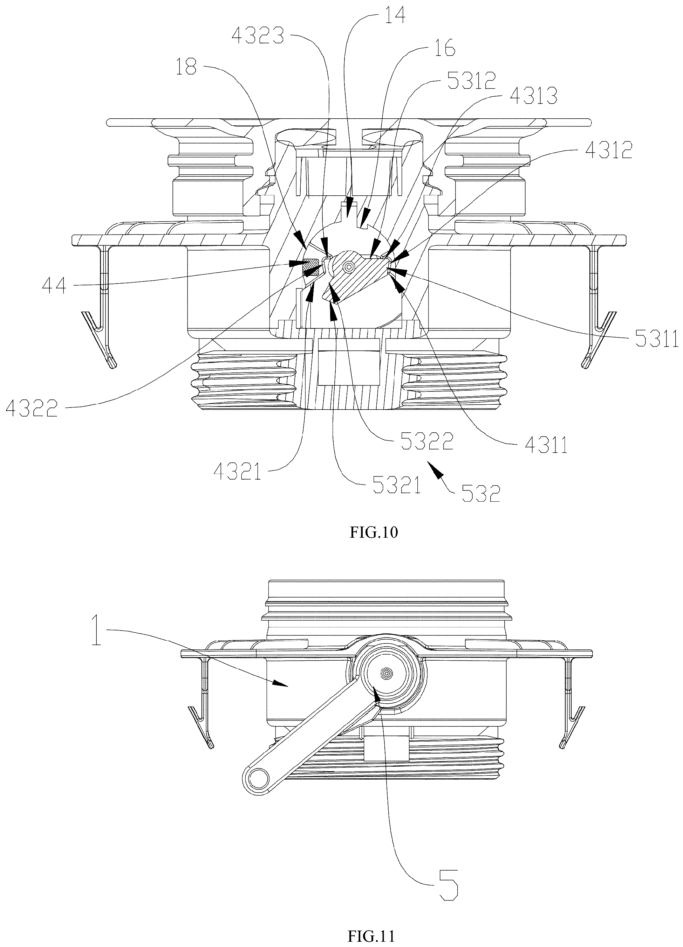

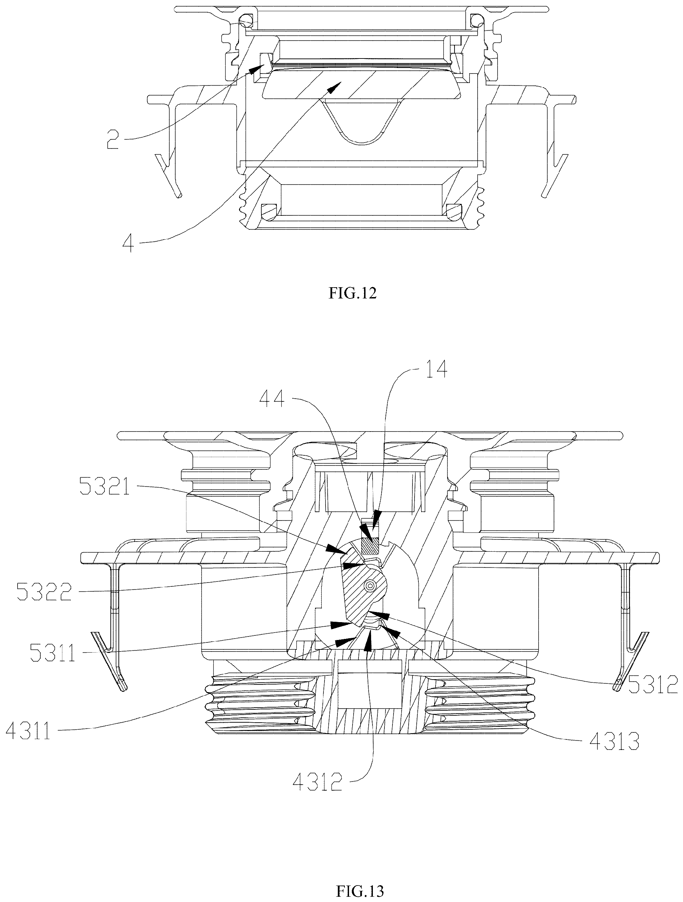

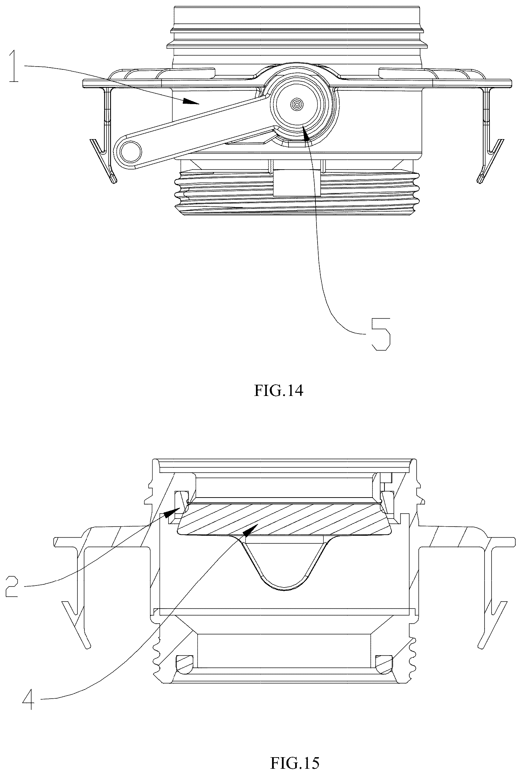

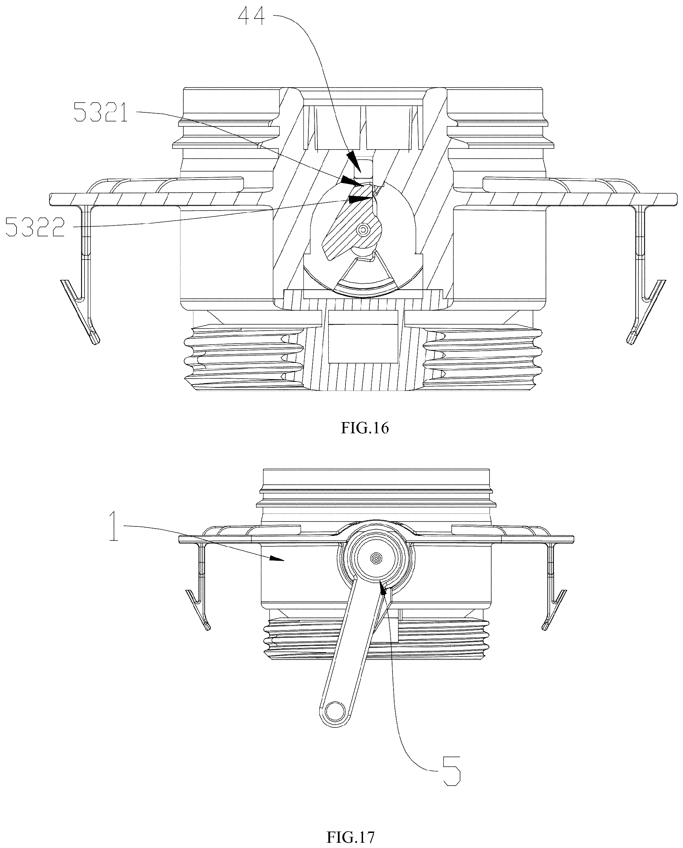

Furthermore, as shown in FIGs. 5, 9, 10, 13 and 16, a protruding guiding post 44 is provided on an end of the valve core 4 that faces the driving member 5. A guiding groove 14 is formed in the housing 1, opening toward the valve core 4 and extending in an axial direction of the passage 10. As shown in FIGs. 11, 12, and 13, when the valve core 4 rotates to the switching position, the guiding post 44 directly faces an opening of the guiding groove 14, the driving member 5 drives the end of the valve core connected thereto to move axially toward the inner valve seat 2, allowing the guiding post 44 to insert into the guiding groove 14. In this embodiment, when the guiding post 44 is positioned outside the opening of the guiding groove 14, i.e., in the switching position, as shown in FIG. 13, continuing to rotate the driving member 5, at this time, the driving member 5 can not drive the valve core 4 to rotate but causes the valve core to be offset toward the inner valve seat 2 in the extension direction of the passage 10, allowing the guiding post 44 to insert into the guiding groove 14, as shown in FIG. 16. As shown in FIG. 15, the valve core 4 and the inner valve seat 2 are in tight contact to achieve a seal. When the valve core 4 moves axially toward or away from the inner valve seat 2, the part of the valve core 4 connected to the drive member 5 can move, driving the valve core 4 as a whole to tilt slightly toward or away from the inner valve seat 2, so that the valve core 4 can be in tight contact with the inner valve seat 2 to achieve a better valve closing effect.

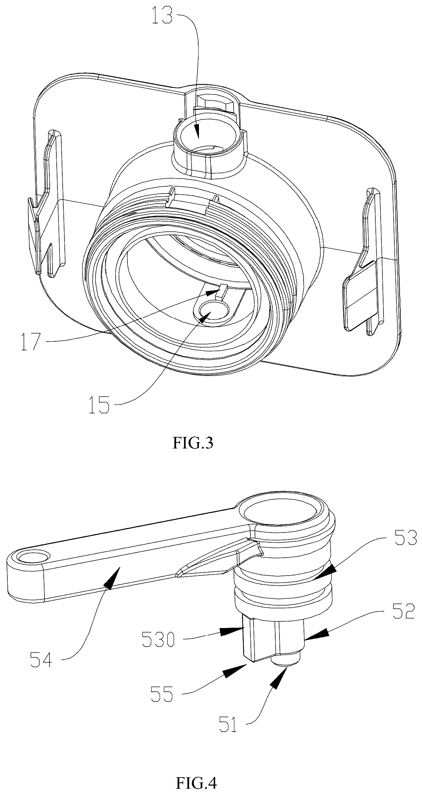

Furthermore, as shown in FIG. 5, the guiding block 43 has a first guiding submodule 431 and a second guiding submodule 432, which are arranged opposite to and spaced apart from each other. The second guiding submodule 432 is provided with a guiding post 44. As shown in FIGS. 3, 9 and 10, the inner contour guiding surface has a first guiding module surface 531 and a second guiding module surface 532, which are arranged opposite to and spaced apart from each other and are located on the first and second guiding submodules 431 and 432, respectively. The first guiding module surface 531 has a first starting portion 4311, a first ending portion 4312, and a first limiting portion 4313, which are sequentially connected and respectively extend in different directions. The second guiding module surface 532 has a second starting portion 4321, a second ending portion 4322, and a second limiting portion 4323, which are sequentially connected and respectively extend in different directions. The outer contour guiding surface 530 has a first drive module surface 531 and a second drive module surface 532, which are arranged opposite to and spaced apart from each other. The first drive module surface 531 has a first drive surface 5311 and a first driven surface 5312 connected in sequence, and the second drive module surface 532 has a second drive surface 5321 and a second driven surface 5322 connected in sequence. As shown in the processes from FIG.16 to FIG.19 and then to FIG.10, that is, by rotating the drive member counterclockwise as shown in the figures, the first driven surface 5312 operatively slides along the first starting portion 4311 to cooperate with the first limiting portion 4313, and the first drive surface 5311 cooperates with the first ending portion 4312, causing the guiding post 44 to slide out of the guiding groove 14, the first driven surface 5312 cooperates with the first limiting portion 4313 to operatively drive the valve core 4 to rotate in a radial direction of the passage 10, causing the guiding post 44 to rotate in a direction away from the guiding groove 14. As shown in the processes in FIGS. 13 to 16, that is, by rotating the driving member clockwise as shown in the figures, the second driven surface 5322 operatively slides along the second starting portion 4321 to cooperate with the second limiting portion 4323, and the second driving surface 5321 cooperates with the second ending portion 4322, causing the guiding post 44 to slide from the opening of the guiding groove 14 into the guiding groove 14, the second driven surface 5322 cooperates with the second limiting portion 4323 to operatively drive the valve core 4 to rotate in the radial direction of the passage 10, causing the guiding post 44 to rotate toward the guiding groove 14. In other embodiments, the guiding block 43 may also be a single piece structure.

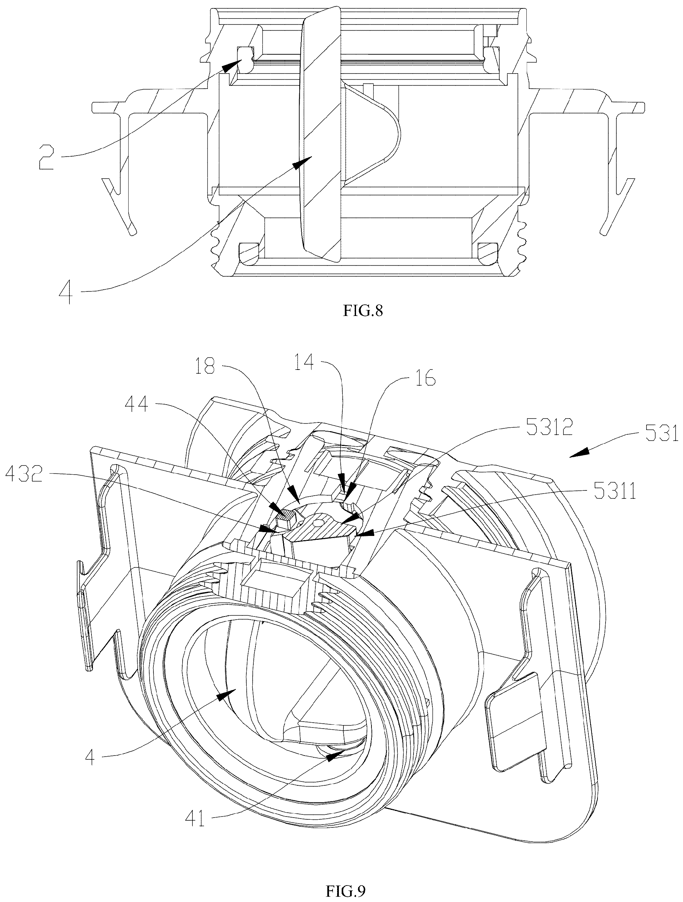

In addition, as shown in FIG.9 and FIG. 13 , the housing has a limiting edge 16 extending toward the mounting hole 13. When the valve core 4 rotates to the switching position, the guiding post 44 abuts against the limiting edge 16 .

Furthermore, as shown in FIG. 9 and 10, a guiding edge 18 is provided at the mounting hole 13, and the limiting edge 16 is connected to the guiding edge 18. When the valve core rotates in the radial direction of the passage 10, the guiding post 44 slides along the guiding edge 18. When the valve core rotates, the guiding edge 18 cooperates with the guiding post 44 to limit and guide the valve core 4. When the guiding post 44 slides along the guiding edge 18 until the valve core 4 is in the switching position (FIG. 13), the guiding post 44 abuts against the limiting edge 16, so that when the driving member 5 rotates, the valve core 4 is not driven to rotate while moves axially toward the inner valve seat 2.

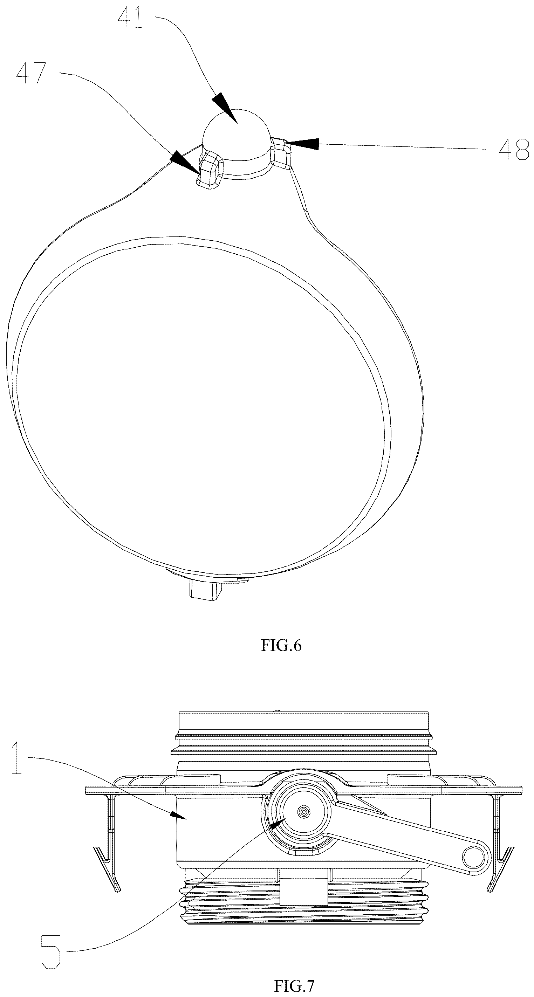

Furthermore, as shown in FIGs. 5 and 6 , the valve core 4 is a flat structure. The valve core 4 has a valve disc, as well as a first extending plate 45 and a second extending plate 46. The first extending plate 45 and the second extending plate 46 are arranged opposite to each other and located on the side of the valve disc away from the inner valve seat 2. A guiding block 43 is disposed on a top surface of the first extending plate 45, and a positioning rod 41 is disposed on a bottom surface of the second extending plate 46.

In addition, as shown in FIGs. 2, 3, and 6, a wall surface of the passage 10 is provided with a housing limiting rib 17, which is located between the rod hole 15 and the inner valve seat 2. The side of the valve core away from the driving member 5 is provided with a first valve core limiting rib 47 and a second valve core limiting rib 48. As shown in FIGS. 11, 12, and 13, when the valve core 4 is in the switching position, the first valve core limiting rib 47 abuts against the housing limiting rib 17; as shown in FIGS. 7, 8, 9, and 10, when the valve core 4 is in the maximum flow position, the second valve core limiting rib 48 abuts against the housing limiting rib 17.

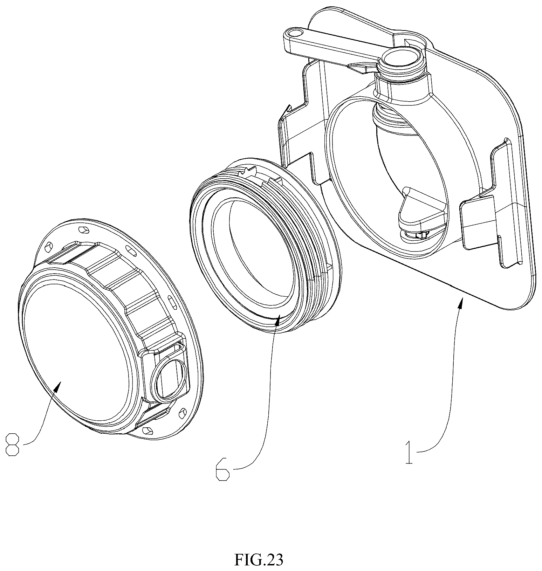

Furthermore, as shown in FIG. 23, the valve 100 may also comprises: a housing connector 6, an outer valve seat 7 and a valve cover 8. The housing connector 6 is detachably connected to the other end of the housing 1. The outer valve seat 7 is arranged in the housing connector 6 and is in a sealed connection with the housing connector 6. The valve cover 8 is detachably connected to the housing connector 6, and when the valve cover 8 covers the housing connector 6, the valve cover 8 seals against the outer valve seat 7. The arrangement of the housing connector 6 can increase the diameter of the left opening of the housing 1, making it easier to install the valve core 4 and the inner valve seat 2 in this embodiment into the housing, and the diameter of the opening end of the housing connector 6 covered by the valve cover 8 can be set to a standard discharge diameter as required. In addition, in some embodiments, according to different processes, the housing connector 6 may be omitted, at this time, the valve cover 8 can directly cover the left opening end of the housing 1.

Specifically, when the valve 100 is fully opened and the axis of the valve core 4 is perpendicular to the extension direction of the passage 10 as shown in FIG. 7, the first driven surface 5312 abuts against the first limiting portion 4313 as shown in FIGS. 9 and 10, the first driving surface 5311 abuts against the first ending portion 4312, and the joint between the first driven surface 5312 and the first driving surface 5311 is located between the area formed by the first limiting portion 4313 and the first ending portion 4312. The valve is operated from an open state to a closed state as follows: the driving member 5 is rotated clockwise, the handle is rotated from the position shown in FIG. 7 to the position shown in FIG. 11, and the valve core 4 is rotated from the position shown in FIG. 8 to the position shown in FIG. 12, the second driven surface 5322 abuts against the second starting portion 4321, allowing the guiding rib 55 to push the second guiding submodule 432 to realize that the driving member 5 drives the valve core 4 to rotate in the radial direction of the passage 10, when the valve core 4 is rotated to the switching position shown in FIGS. 11, 12 and 13, the valve core 4 directly faces the cross-section of the passage 10, the axis of the valve core 4 and the extension direction of the passage 10 are almost the same, and the guiding post 44 is located at the opening of the guiding groove 14. Continuing to rotate the driving member 5 in the forward direction, due to the limiting edge 16, in the switching position, the first valve core limiting rib 47 abuts against the housing limiting rib 17. As shown in FIGS. 14, 15 and 16, the second driven surface 5322 rotates in the forward direction and slides along the second starting portion 4321 to cooperate with the second limiting portion 4323, at this time, the valve core 4 is pushed by the guiding rib 55 to move axially toward the inner valve seat 2 to press the inner valve seat 2, causing the guiding post 44 to slide from the opening of the guiding groove 14 into the guiding groove 14 to close the valve.

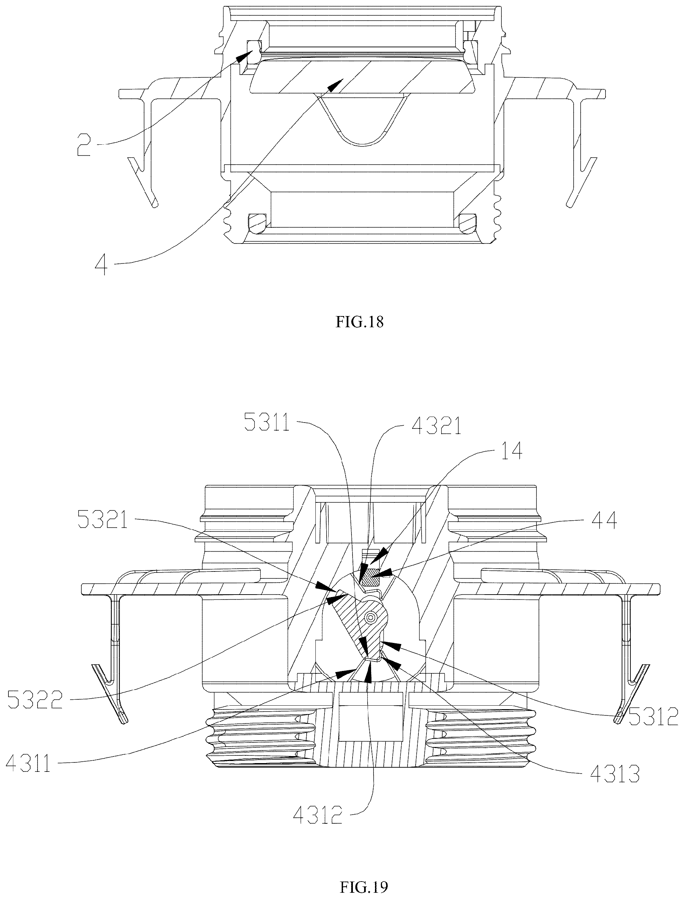

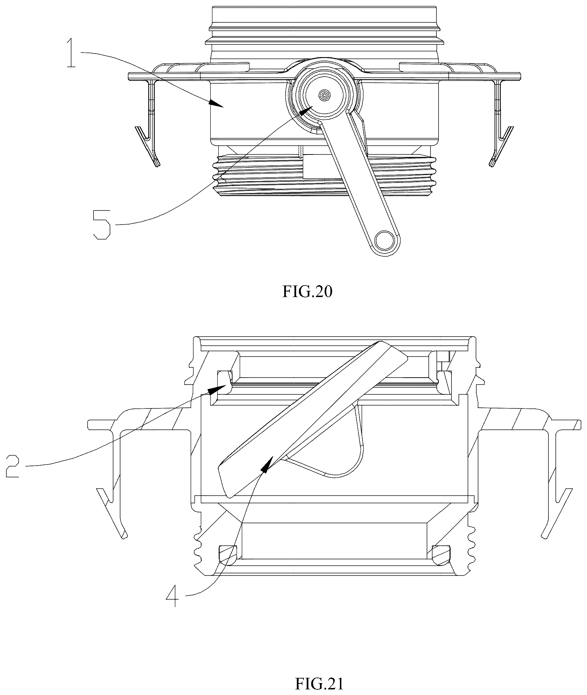

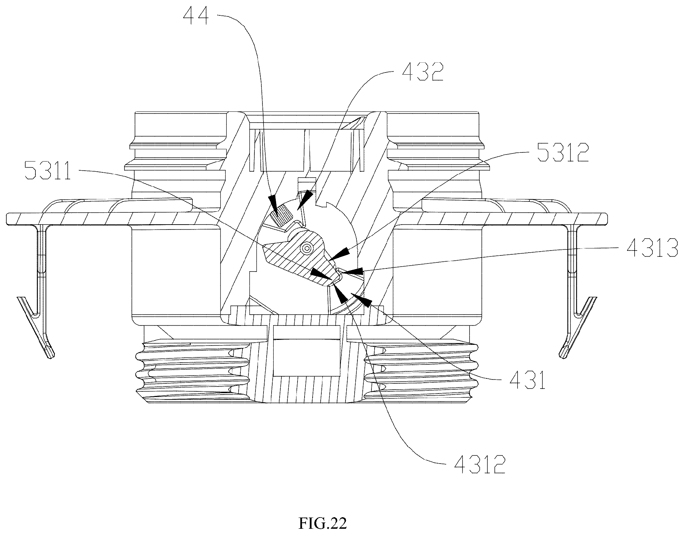

When the valve needs to be opened after being closed, the driving member 5 is rotated counterclockwise, as shown in FIGs. 17, 18 and 19, so that the first driven surface 5312 abuts against the first starting portion 4311, the first driven surface 5312 slides along the first starting portion 4311 to cooperate with the first limiting portion 4313, and the first driving surface 5311 cooperates with the first ending portion 4312, the joint between the first driven surface 5312 and the first driving surface 5311 is located between the area formed by the first limiting portion 4313 and the first ending portion 4312, during this process, the guiding rib 55 pushes the first guiding submodule 431 to cause the valve core 4 to move axially away from the inner valve seat 2, so that the guiding post 44 slides out of the guiding groove 14, that is, from the state in FIG. 16 to the state in FIG. 19, the valve core 4 will not be in tight contact with the inner valve seat 2, which facilitates the subsequent rotational movement of the valve core 4. Continuing to rotate the driving member 5 counterclockwise, the guiding rib 55 pushes the first guiding submodule 431 to rotate the valve core 4 counterclockwise, at this time, the valve core rotates in the radial direction of the passage 10, as shown in FIGS. 20, 21 and 22, allowing the valve to be opened gradually, finally the valve is opened to the maximum flow state, as shown in FIG. 8.

In this embodiment, the valve core 4 cooperates with the inner valve seat 2 to close the valve, that is, the valve core presses the inner valve seat 2 toward the container side to close the valve. In other embodiments, the valve core can also press the inner valve seat 2 toward the valve cover 8 to close the valve.

While preferred embodiments of the present invention have been described in detail above, it should be understood that aspects of the embodiments can be modified, if necessary, to employ aspects, features and concepts of the various patents, applications and publications to provide further embodiments.

These and other changes can be made to the embodiments in light of the above detailed description.In general, in the claims, the terms used should not be construed as limited to the specific embodiments disclosed in the specification and claims, but should be construed to include all possible embodiments along with the full scope of equivalents to which these claims are entitled.

Those skilled in the art will appreciate that the above-mentioned embodiments are specific examples for implementing the present invention, and that in actual applications, various changes may be made thereto in form and detail without departing from the spirit and scope of the present invention.

## Claims

1. A valve comprising:
a housing, which has a passage extending therethrough;
a flange, which is in a sealed connection with one end of the housing;
an inner valve seat, which is disposed in the passage and in a sealed connection with the housing;
a valve core, which is movably disposed in the passage; and
a driving member, which passes through the housing and is connected to an mounting surface of the valve core; the mounting surface of the valve core has a guiding block protruding toward the driving member, and the guiding block has an inner contour guiding surface; the driving member has a guiding rib, and the guiding rib has an outer contour guiding surface; the outer contour guiding surface cooperates with the inner contour guiding surface to drive the valve core to rotate to a switching position along a radial direction of the passage, and when the valve core rotates to the switching position, drive an end of the valve core connected to the driving member to move axially toward the inner valve seat and press the inner valve seat to close the passage.

2. The valve according to claim 1, wherein the driving member has a positioning post, a transition post and a connecting post which are connected in sequence from an inside of the passage to an outside of the passage; the positioning post is operatively inserted into the mounting surface of the valve core, the guiding rib protrudes from an outer periphery of the transition post, and the connecting post is connected to the housing and passes through the housing.

3. The valve according to claim 2, wherein the positioning post, the transition post, the guiding ribs and the connecting post are integrated.

4. The valve according to claim 1, wherein the valve core has a protruding positioning rod on a side away from the driving member; a wall surface of the passage is provided with a rod hole for inserting the positioning rod, and the positioning rod is rotatably inserted into the rod hole;
the housing is provided with a mounting hole for the driving member to pass through, the mounting hole is communicated with the passage, and the mounting hole is arranged opposite to the rod hole.

5. The valve according to claim 4, wherein a protruding guiding post is provided at one end of the valve core facing the driving member;
the housing is provided with a guiding groove opening toward the valve core, and the guiding groove extends in an axial direction of the passage; when the valve core rotates to the switching position, the guiding post directly faces an opening of the guiding groove, and the driving member drives an end of the valve core connected thereto to move axially toward the inner valve seat to allow the guiding post to be inserted into the guiding groove.

6. The valve according to claim 5, wherein the guiding block comprises a first guiding submodule and a second guiding submodule which are arranged opposite to and separated from each other; the inner contour guiding surface comprises a first guiding module surface and a second guiding module surface; the first guiding module surface and the second guiding module surface are arranged opposite to and separated from each other, and are respectively located on the first guiding submodule and the second guiding submodule; the guiding post is arranged on the second guiding submodule;
the first guiding module surface comprises a first starting portion, a first ending portion, and a first limiting portion, which are sequentially connected and extend in different directions; the second guiding module surface comprises a second starting portion, a second ending portion, and a second limiting portion, which are sequentially connected and extend in different directions;
the outer contour guiding surface comprises a first driving module surface and a second driving module surface; the first driving module surface and the second driving module surface are arranged opposite to each other and spaced apart;
the first driving module surface has a first driving surface and a first driven surface connected in sequence; the second driving module surface has a second driving surface and a second driven surface connected in sequence;
the first driven surface is operatively slide along the first starting portion to cooperate with the first limiting portion, and the first driving surface cooperates with the first ending portion, so that the guiding post slides out of the guiding groove; the first driven surface cooperates with the first limiting portion to operatively drive the valve core to rotate along a radial direction of the passage, so as to cause the guiding post to rotate in a direction away from the guiding groove;
the second driven surface is operatively slid along the second starting portion to cooperate with the second limiting portion, and the second driving surface cooperates with the second ending portion, so that the guiding post slides from the opening of the guiding groove into the guiding groove; the second driven surface cooperates with the second limiting portion to operatively drive the valve core to rotate along the radial direction of the passage, so as to cause the guiding post to rotate toward the direction of the guiding groove.

7. The valve according to claim 5, wherein the housing has a limiting edge extending toward the mounting hole, and when the valve core rotates to the switching position, the guiding post abuts against the limiting edge.

8. The valve according to claim 5, wherein a guiding edge is provided at the mounting hole, and when the valve core rotates in a radial direction of the passage, the guiding post slides along the guiding edge.

9. The valve according to claim 4, wherein the valve core is a flat structure;
the valve core has a valve disc, and a first extending plate and a second extending plate, wherein the first extending plate and the second extending plate are arranged opposite to each other and are located on a side of the valve disc away from the inner valve seat;
the guiding block is arranged on a top surface of the first extending plate;
the positioning rod is arranged on a bottom surface of the second extending plate.

10. The valve according to claim 4, wherein the wall surface of the passage is provided with a housing limiting rib, which is located between the rod hole and the inner valve seat;
the side of the valve core away from the driving member has a first valve core limiting rib and a second valve core limiting rib; when the valve core is in the switching position, the first valve core limiting rib abuts against the housing limiting rib; when the valve core is in the maximum valve flow position, the second valve core limiting rib abuts against the housing limiting rib.

11. The valve according to claim 1, wherein the valve further comprises:
a housing connector, which is detachably connected to the other end of the housing;
an outer valve seat, which is disposed in the housing connector and is in a sealed connection with the housing connector; and
a valve cover, which is detachably connected to the housing connector, and when the valve cover covers the housing connector, the valve cover is sealed against the outer valve seat.
